# EUROPÄISCHE PATENTANMELDUNG

(11) **EP 4 296 119 A1**
(43) Veröffentlichungstag der Anmeldung: **27.12.2023**
(21) Anmeldenummer: 23154901.5
(22) Anmeldetag: 03.02.2023
(51) Int. Cl.: B60P 3/39

(54) **CAMPINGFAHRZEUG MIT SANITÄRABSCHNITT**

(30) Priorität: 22.06.2022 DE 202022103483 U
(71) Anmelder: Knaus Tabbert AG, 94118 Jandelsbrunn (DE)
(72) Erfinder: VATERL, Werner, 94146 Hinterschmiding (DE)
(74) Vertreter: advotec.

(57) **Zusammenfassung**

Es wird ein Campingfahrzeug, insbesondere ein Wohnmobil, ein Wohnwagen, ein Campingbus, ein Freizeitfahrzeug mit Hubdach oder dergleichen vorgeschlagen, mit einem Fahrzeuginnenraum (01), der einen Sanitärabschnitt (02) umfasst. Der Sanitärabschnitt (02) eine Kabineneinheit (03) umfasst, die ein Unterteil (04), das fahrzeugfest angeordnet ist, und mindestens ein Oberteil (05) umfasst, das gegenüber dem Unterteil (04) in Fahrzeughochrichtung (06) aus einer abgesenkten Staustellung in eine angehobenen Nutzstellung verlagerbar ist, so dass ein Innenraum (07) der Kabineneinheit (03) für einen Nutzer stehend zugänglich ist.

## Beschreibung

Die vorliegende Erfindung betrifft ein Campingfahrzeug, insbesondere Wohnmobil, Wohnwagen, Campingbus, Freizeitfahrzeug mit Hubdach oder dergleichen, mit einem Fahrzeuginnenraum, welcher einen Sanitärabschnitt umfasst.

Derartige Campingfahrzeuge sind aus dem Stand der Technik bekannt. Der Sanitärabschnitt derartiger Campingfahrzeuge umfasst in der Regel eine Waschstation, beispielsweise ein Waschbecken, eine Dusche etc. sowie eine Toilette. Im Caravan-Bereich ist der in den Campingfahrzeugen zur Verfügung stehende Platz oft sehr begrenzt. Es besteht daher der Wunsch, den verfügbaren Raum möglichst gut zu nutzen, wobei die unterschiedlichen Abschnitte, wie beispielsweise Sanitär-, Schlaf- oder Wohnabschnitt in platzsparenderweise miteinander kombiniert sind, um mehr Platz sowohl im Wohn-/Schlafabschnitt, insbesondere im Bettbereich des Schlafabschnitts, als auch im Sanitärabschnitt zur Verfügung zu haben. Aufgrund des beschränkten Platzangebots in Campingfahrzeugen wird der Sanitärabschnitt häufig sehr klein ausgeführt, was dazu führt, dass dem Benutzer in diesem Raum aufgrund der vorhandenen Sanitärgegenstände kaum Raum zur Bewegung verbleibt. Weiterhin ist in gattungsgemäßen Campingfahrzeugen der Wohnabschnitt des Wohnmobils möglichst groß gestaltet und die weiteren lediglich funktional erforderlichen Einrichtungen, wie beispielsweise der Sanitärabschnitt, auf ein Minimum beschränkt. Dies wiederum schränkt jedoch mitunter die Benutzbarkeit derartiger Einrichtungen und/oder den Komfort ein. Um den zur Verfügung stehenden Platz möglichst optimal auszunutzen, sind Sanitärabschnitte mit einem schwenkbaren Waschbecken zur Schaffung eines separaten Duschraums oder zweigeteilte Sanitärabschnitte mit unabhängig voneinander nutzbarem Toilettenraum und Dusche bekannt. Wenngleich durch die bekannten Lösungen alle Sanitärobjekte genutzt werden können, wird der knapp bemessene Raum in Zeiten der Nichtbenutzung, insbesondere in Zeiten der Nichtbenutzung der Dusche, zur anderweitigen Verwendung als Wohn-/Schlafbereich verschwendet.

Insofern ist es Aufgabe der vorliegenden Erfindung, ein Campingfahrzeug zur Verfügung zu stellen, welches die genannten Nachteile überwindet. Der Erfindung liegt insbesondere die Aufgabe zugrunde, ein Campingfahrzeug zur Verfügung zu stellen, bei dem trotz eines großzügig angelegten Sanitärabschnitts der Platzbedarf des Sanitärabschnitts, insbesondere bei Nichtnutzung, auf ein Minimum reduziert werden kann.

Diese Aufgabe wird durch ein Campingfahrzeug der eingangs genannten Art gelöst, bei dem der Sanitärabschnitt eine Kabineneinheit umfasst, die ein Unterteil, das am Fahrzeug fest angeordnet ist und mindestens ein Oberteil umfasst, das gegenüber dem Unterteil in Fahrzeughochrichtung aus einer abgesenkten Staustellung in eine angehobene Nutzstellung verlagerbar ist, so dass ein Innenraum der Kabineneinheit für einen Nutzer stehend zugänglich ist.

Dadurch, dass das mindestens eine Oberteil der Kabineneinheit des Sanitärabschnitts insbesondere teleskopartig verlagerbar ist, kann das Oberteil von einer Staustellung, in welcher die Kabineneinheit und somit der Sanitärabschnitt einen möglichst geringen Raum umgrenzt, in eine Nutzstellung verbracht werden, in welcher die Kabineneinheit einen möglichst großen Raum umgrenzt. In der Nutzstellung des Oberteils der Kabineneinheit steht dem Benutzer somit ein möglichst geräumiger Waschraum oder Sanitärabschnitt, insbesondere ein nutzbarer Duschraum, zur Verfügung, während in der Staustellung ein Anteil des in Nutzstellung für den Waschraum oder Sanitärabschnitt benötigte Raum in den Wohn- oder Schlafabschnitt, beispielsweise in einen Bettbereich, integriert werden kann. Vorteilhafterweise kann somit in Nutzstellung des Oberteils eine ausreichende Stehhöhe im Sanitärabschnitt geschaffen werden, um dem Nutzer eine komfortable Nutzung der Sanitärgegenstände, wie beispielsweise Waschbecken oder Dusche zu ermöglichen. Demgegenüber kann in Staustellung des Oberteils bei Nichtbenutzung des Sanitärabschnitts der Raumbedarf der Kabineneinheit verringert werden und dadurch ein Raumgewinn in anderen Abschnitten des Campingfahrzeugs, beispielsweise im Schlafabschnitt oder Wohnabschnitt, erzielt werden. Vorteilhafterweise kann je nach Gestaltung des Innenraums der Kabineneinheit auch der Raum innerhalb des Oberteils in Staustellung des Oberteils, beispielsweise als variabler Stauraum, wie für Wäschekörbe, oder beispielsweise auch als Kleiderschrank, genutzt werden.

Im Rahmen der Erfindung weist das Campingfahrzeug zumindest einen Sanitärabschnitt und einen Wohnabschnitt und/oder einen Schlafabschnitt auf. Der Schlafabschnitt umfasst zumindest einen Bettbereich. Der Sanitärabschnitt kann verschiedene Bereiche umfassen, wobei die Kabineneinheit Teil des Sanitärabschnitts ist. Bevorzugt umfasst der Sanitärabschnitt zumindest einen Toilettenbereich, in dem eine Toilette angeordnet ist, und eine Kabineneinheit, die beispielsweise als Duschbereich mit einer Duschkabine ausgebildet ist. Weiter bevorzugt ist der Toilettenbereich jederzeit nutzbar und zugänglich und dementsprechend nicht in eine Staustellung verbringbar. Es ist weiter denkbar, dass der Sanitärabschnitt zweigeteilt ist, und beispielsweise Toilettenbereich und Kabineneinheit unabhängig voneinander nutzbar sind.

Das Campingfahrzeug nach der Erfindung ist insbesondere ein Wohnmobil, ein Wohnwagen, ein Campingbus, ein Freizeitfahrzeug mit Hubdach bzw. Ausstelldach (Caravaning Utility Vehicle) oder dergleichen.

Bei einer bevorzugten Ausführungsform des erfindungsgemäßen Campingfahrzeugs ist das Oberteil in der abgesenkten Staustellung von dem Unterteil aufgenommen. Dadurch ist vorteilhafterweise das Oberteil sicher und stabil verwahrt, so dass der in Staustellung des Oberteils geschaffene Raum als Stauraum genutzt werden kann und gleichzeitig weder optische noch funktionale Beeinträchtigungen aufgrund einer anderweitigen Verstauung des Oberteils hervorgerufen werden. Vielmehr kann durch einfaches Absenken des Oberteils in das Unterteil auf äußerst einfache Art und Weise zusätzlicher Raum im Campingfahrzeug geschaffen werden. Zudem ist, wenn das Oberteil in der abgesenkten Staustellung von dem Unterteil aufgenommen ist, sowohl in Nutzstellung als auch in Staustellung eine sichere Wasserführung möglich, da die mit Wasser in Berührung kommenden Teile des Sanitärabschnitts derart angeordnet werden können, dass diese nicht im Schlaf- oder Wohnabschnitt zugänglich sind. Für einen sauberen und verkantungsfreien Lauf des Oberteils in das Unterteil der Kabineneinheit wird das Oberteil bevorzugt über Laufschienen geführt, die bei einer vorteilhaften Ausführungsform außerhalb des Nassbereichs angeordnet sind.

Mit Vorteil weist das Oberteil der Kabineneinheit eine Decke auf, die in der abgesenkten Staustellung eine Nutzfläche bildet. Die Nutzfläche kann je nach Ausgestaltung, beispielsweise als Liegefläche, Erweiterung einer Liegefläche, Sitzfläche, Stauraumfläche oder Ablagefläche, genutzt werden. Somit wird vorteilhafterweise der in Staustellung des Oberteils geschaffene Raum durch die Ausbildung einer Nutzfläche, insbesondere oberhalb des Oberteils, einer weiteren Nutzung zugänglich gemacht.

Als besonders vorteilhaft hat es sich erwiesen, wenn die Nutzfläche Teil einer Liegefläche ist, die von der Decke des Oberteils und von einem Bettbereich gebildet ist. Somit kann der in Staustellung des Oberteils im Campingfahrzeug, insbesondere im Schlafabschnitt geschaffene Raum, einer Liegefläche im Bettbereich zugeordnet werden, wodurch in einfacher Art und Weise die Liegefläche im Campingfahrzeug vergrößert werden kann.

An der Decke des Oberteils kann ein Lattenrostelement angeordnet sein. Bei Anordnung eines Lattenrostelements an der Decke des Oberteils kann vorteilhafterweise die Liegefläche eines Bettbereichs derart erweitert werden, dass der komplette Bettbereich mit einem Lattenrost ausgestattet ist. Somit kann in einfacher Art und Weise durch Anordnen eines Einlegers, der als Matratze ausgebildet ist, auf der Decke eine komfortable Liegefläche geschaffen werden kann. Bevorzugt ist an der Decke des Oberteils das Lattenrostelement genauso ausgestaltet wie das Lattenrostelement oder die Lattenrostelemente des übrigen Bettbereichs.

Gemäß einer bevorzugten Ausführungsform umfasst das Campingfahrzeug einen Riemen- oder Seilantrieb zur Unterstützung der Verlagerung des Oberteils zwischen Staustellung und Nutzstellung. Ein Riemen- oder Seilantrieb ist vorteilhafterweise nahezu wartungsfrei und weist einen minimalen Verschleiß auf, weshalb er eine gegenüber anderen Antriebsarten deutlich längere Lebensdauer aufweist. Weiter ist der Riemen- oder Seilantrieb sehr leise und damit kaum hörbar zu betätigen. Bevorzugt ist der Riemen des Riemenantriebs in der Art eines Gurtbands ausgebildet.

Gemäß einer bevorzugten Ausführungsform umfasst der Riemen- oder Seilantrieb ein Antriebselement, das eine Wickelwelle für mindestens einen Riemen/ein Seil aufweist, wobei der Riemen/das Seil an das Oberteil angebunden ist. Durch Aufrollen des bevorzugt als Gurtband ausgebildeten Riemens bzw. des Seils kann somit in einfacher Art und Weise das Oberteil aus der Nutzstellung in die Staustellung verbracht werden. Entsprechend kann durch Abrollen des Riemens bzw. des Seils von der drehbar gelagerten Wickelwelle das Oberteil von der Staustellung in die Nutzstellung verlagert werden. Insofern die Wickelwelle durch das Antriebselement angetrieben wird, kann die Verlagerung zwischen Nutzstellung und Staustellung maschinell und/oder automatisiert erfolgen oder eine manuelle Verlagerung durch den Antrieb unterstützt werden. Vorteilhafterweise wird gerade so viel Kraft in die Mechanik eingebracht, dass das Eigengewicht des Oberteils kompensiert wird, und daher das Oberteil bequem und mühelos mittels des Riemenantriebs manuell bewegt werden kann. Bevorzugt weist der Riemen- oder Seilantrieb zwei drehfest an der Wickelwelle angeordnete Führungsrollen für jeweils einen Riemen bzw. ein Seil auf, um ein gleichmäßiges und geführtes Auf- und Abrollen der Riemen bzw. der Seile und somit eine gleichmäßige Bewegung des Oberteils zu ermöglichen. Weiter bevorzugt sind die Führungsrollen als Gurtrollen und die Riemen als Gurtband ausgebildet.

Um die Verlagerung des Oberteils zwischen einer Nutzstellung und einer Staustellung nach der Erfindung zu erleichtern, kann die Hubmechanik eine Antriebseinheit umfassen, die vorzugsweise eine Gasdruckfeder und/oder einen Antriebsmotor umfasst. Die Antriebseinheit kann dazu ausgebildet sein, den Riemenantrieb anzutreiben und insbesondere eine Drehbewegung der Wickelwelle zu erzeugen. Bevorzugt wird die Verlagerung des Oberteils zwischen einer Nutzstellung und einer Staustellung durch eine eine Gasdruckfeder umfassende Antriebseinheit unterstützt.

Die Antriebseinheit kann gemäß einer bevorzugten Ausführungsform neben einer Gasdruckfeder zumindest eine Seilrolle und ein Seil aufweisen. Das Seil kann von einer Seilrolle auf- und abgewickelt werden und ist über zwei Umlenkpunkte, bevorzugt über Umlenkrollen, derart mit der Gasdruckfeder verbunden, dass die Linearbewegung der Gasdruckfeder in eine Drehbewegung der Seilrolle umgewandelt wird. Bevorzugt ist die Seilrolle auf der Wickelwelle des Riemenantriebs verdrehfest angeordnet, so dass eine Drehbewegung der Seilrolle eine Drehbewegung der Wickelwelle und somit ein Auf- und/oder Abrollen des Riemens bewirkt. Das Aus- und Einfahren der Gasdruckfeder kann vorteilhafterweise über die Wickelwelle eine Drehbewegung der Führungsrollen bewirken, auf welchen der Riemen auf- und/oder abwickelbar angeordnet ist, wodurch das Oberteil in eine Nutzstellung angehoben oder in eine Staustellung abgesenkt werden kann. Weiter bevorzugt verfügt die Seilrolle über eine Steigung, um unterschiedliche Kräfte je nach Hub der Gasdruckfeder zu kompensieren. Es hat sich als vorteilhaft erwiesen, wenn die Hubmechanik zumindest in zwei Positionen arretiert werden kann. Bevorzugt wird die Hubmechanik in Staustellung und in Nutzstellung arretiert. Es ist jedoch in Abhängigkeit der Anwendung auch denkbar, dass die Hubmechanik in mehr als zwei Positionen arretierbar ist und/oder stufenlos arretierbar ist.

Die Hubmechanik kann zusätzlich oder alternativ zu dem Riemenantrieb oder Seilantrieb einen Spindelantrieb, einen Zahnstangenantrieb, Gasfedern und/oder sonstige geeignete Antriebselemente umfassen.

Mit Vorteil bildet die Kabineneinheit eine Duschkabine und an einem Boden der Kabineneinheit ist eine Duschwanne ausgebildet. Somit kann der ohnehin nur zeitweise bzw. kurzzeitig genutzte Raum der Dusche einer mehrfachen Nutzungsmöglichkeit zugeführt werden. Denn im Rahmen der Erfindung wurde es erkannt, dass Waschbecken und Toilette wesentlich häufiger als die Dusche in einem Campingfahrzeug genutzt werden, weshalb es sich als sinnvoll erwiesen hat, die Kabineneinheit derart zu gestalten, dass diese eine Duschkabine bildet. Bevorzugt ist sowohl das Unterteil als auch das mindestens eine Oberteil der Kabineneinheit wasserdicht ausgekleidet, so dass eine vollständig wasserdichte Duschkabine entsteht. Weiter bevorzugt ist die Kabineneinheit mittels Kunststoffverkleidungen verkleidet.

Bei einer bevorzugten Ausführungsform des erfindungsgemäßen Campingfahrzeugs grenzt die Kabineneinheit an einen Toilettenbereich des Sanitärabschnitts, und die Kabineneinheit ist in der Nutzstellung des Oberteils von dem Toilettenbereich durch eine öffenbare Türanordnung getrennt. Es ist denkbar, dass die Duschkabine in Nutzstellung des Oberteils durch eine klappbare oder verschwenkbare Türanordnung vom übrigen Sanitärbereich abgegrenzt ist, um eine allseitig geschlossene Duschkabine bereitzustellen. Die Türanordnung kann mehrteilig ausgebildet sein. So kann die Türanordnung einen in Fahrzeughochrichtung oberen Teil, der als obere Klapptür bezeichnet ist, und einen unteren Teil, der als untere Klapptür bezeichnet ist, aufweisen. Die obere Klapptür, welche im Wesentlichen die Höhe des Oberteils aufweist, ist am Oberteil angeordnet, und die untere Klapptür der Türanordnung ist am Unterteil der Kabineneinheit angeordnet und derart klappbar, dass die untere Klapptür in Staustellung in dem in Staustellung zwischen Oberteil und Unterteil gebildetem Zwischenraum verstaut werden kann. Damit ist die untere Klapptür der Türanordnung bei abgesenktem Oberteil nicht sichtbar. Dadurch, dass zudem die obere Klapptür bei Nichtgebrauch zusammengeklappt werden kann, ist der Raum innerhalb des Oberteils auch in Staustellung des Oberteils, beispielsweise als variabler Stauraum für Wäschekörbe oder als Kleiderschrank, nutzbar.

Weiter hat es sich als vorteilhaft erwiesen, um Platzbedarf einzusparen, die Mischbatterie, den Duschschlauch und den Duschkopf innerhalb des Zwischenraums, der in Staustellung des Oberteils zwischen Oberteil und Unterteil gebildet wird, anzuordnen.

Bei einer Weiterbildung des erfindungsgemäßen Campingfahrzeugs umfasst der Toilettenbereich auf der Seite der Kabineneinheit eine Klappenanordnung, die in der Staustellung des Oberteils eine Trennwand zu einer Sanitärabschnittumgebung bildet und die vorzugsweise an das Oberteil der Kabineneinheit angelenkt ist und die vorzugsweise bei einem Verstellen des Oberteils gegenüber dem Unterteil der Kabineneinheit zwangsgesteuert eine Verschwenkbewegung erfährt. Demnach bildet die bevorzugt in der Art einer Platte ausgebildete Klappe der Klappenanordnung in Staustellung des Oberteils eine Seitenwand des Toilettenbereichs aus und liegt in Nutzstellung des Oberteils auf dem Oberteil auf. Dadurch ergibt sich sowohl in Nutzstellung des Oberteils ein vom Wohn-/Schlafabschnitt getrennter Sanitärabschnitt als auch in der Staustellung des Oberteils. Besonders vorteilhaft erfährt die Klappenanordnung, insbesondere die Klappe der Klappenanordnung, eine Verschwenkbewegung in Abhängigkeit der Verstellung des Oberteils. Das heißt mit anderen Worten, dass bei Anheben des Oberteils in Fahrzeughochrichtung die Klappe der Klappenanordnung angehoben und um eine Lagereinrichtung verschwenkt wird. Dabei ist es denkbar, dass eine Lagereinrichtung am Oberteil der Kabineneinheit und/oder an zumindest einer Wandung des Toilettenbereichs angeordnet ist. Bevorzugt weist die Klappenanordnung zwei Platten auf, die derart gelenkig verbunden sind, dass die Platten in Staustellung flächig zur Anlage kommen und in Nutzstellung die Trennwand aufspannen. Weiter bevorzugt ist eine der zwei Platten am Oberteil angelenkt und die weitere Platte am feststehenden Toilettenbereich angelenkt.

Mit Vorteil weist das Campingfahrzeug ein Waschbecken auf, das zumindest teilweise in die Kabineneinheit insbesondere in einer Führungsanordnung verlagerbar ist und vorzugsweise verschiebbar, verschwenkbar und/oder klappbar ist. Hierdurch kann weiterer Platzbedarf eingespart werden, da das Waschbecken je nach Nutzung des Sanitärabschnitts verschoben werden kann. Soll beispielsweise nur das Waschbecken genutzt werden, kann das Waschbecken in den Toilettenbereich verschoben werden und das Oberteil der Kabineneinheit in Staustellung verbleiben. Soll die Toilette genutzt werden, kann das Waschbecken entsprechend in die Kabineneinheit verschoben werden. Soll die Kabineneinheit, insbesondere die Dusche in der Kabineneinheit genutzt werden, kann das Waschbecken in der Führungsanordnung aus der Kabineneinheit heraus in den Toilettenbereich verschoben werden. Es hat sich als vorteilhaft erwiesen, dass das Verschieben des Waschbeckens sowohl in Staustellung des Oberteils als auch in Nutzstellung des Oberteils erfolgen kann. Hierzu ist das Unterteil vorteilhafterweise in Richtung des Toilettenbereichs geöffnet.

Weitere Merkmale der Erfindung ergeben sich aus der nachfolgenden Beschreibung bevorzugter Ausführungsbeispiele der Erfindung in Verbindung mit den Figuren und den Unteransprüchen. Hierbei können die einzelnen Merkmale für sich alleine oder in Kombination miteinander verwirklicht sein.

Es zeigen:
- **Fig. 1**: einen Ausschnitt des Fahrzeuginnenraums mit Sanitärabschnitt und einem Oberteil der Kabineneinheit in Nutzstellung sowie den Bettbereich ohne Matratze in isometrischer Ansicht;
- **Fig. 2**: den Ausschnitt des Fahrzeuginnenraums mit Sanitärabschnitt und Bettbereich von Fig. 1 mit Matratze im Bettbereich;
- **Fig. 3**: den Ausschnitt des Fahrzeuginnenraums von Fig. 1 beim Verlagern des Oberteils von der angehobenen Nutzstellung in die abgesenkte Staustellung;
- **Fig. 4**: den Ausschnitt des Fahrzeuginnenraums von Fig. 1 mit dem Oberteil der Kabineneinheit in abgesenkter Staustellung ohne Einleger;
- **Fig. 5**: den Ausschnitt des Fahrzeuginnenraums von Fig. 1 mit dem Oberteil der Kabineneinheit in abgesenkter Staustellung und mit Einleger;
- **Fig. 6**: den Ausschnitt des Fahrzeuginnenraums von Fig. 1 mit dem Oberteil der Kabineneinheit in Staustellung ohne Matratze;
- **Fig. 7**: den Ausschnitt des Fahrzeuginnenraums gemäß Fig. 1 mit Oberteil der Kabineneinheit in Staustellung in einer weiteren isometrischen Ansicht;
- **Fig. 8**: den Ausschnitt des Fahrzeuginnenraums gemäß Fig. 7 ohne Tür und Trennwand des Toilettenbereichs;
- **Fig. 9**: eine Draufsicht auf einen Sanitärabschnitt eines erfindungsgemäßen Campingfahrzeugs mit ausgeklappter Türanordnung;
- **Fig. 10**: eine Draufsicht auf den Sanitärabschnitt von Fig. 9 mit eingeklappter Türanordnung;
- **Fig. 11**: einen Schnitt durch eine Kabineneinheit eines erfindungsgemäßen Campingfahrzeugs mit Oberteil in Nutzstellung und Hubmechanik;
- **Fig. 12**: einen Querschnitt durch die Kabineneinheit von Fig. 11 mit Oberteil in Staustellung und Hubmechanik;
- **Fig. 13**: eine isometrische Ansicht der Kabineneinheit und einer Liegefläche eines erfindungsgemäßen Campingfahrzeugs mit Oberteil in Nutzstellung;
- **Fig. 14**: eine Kabineneinheit und Liegefläche gemäß Fig. 13 mit Oberteil in Staustellung;
- **Fig. 15**: eine Hubmechanik einer Kabineneinheit eines erfindungsgemäßen Campingfahrzeugs in isometrischer Ansicht;
- **Fig. 16**: den Ausschnitt des Fahrzeuginnenraums eines erfindungsgemäßen Campingfahrzeugs in perspektivischer Ansicht mit Oberteil in Staustellung und geschlossener Toilettentür;
- **Fig. 17**: den Ausschnitt des Fahrzeuginnenraums von Fig. 16 mit geöffneter Toilettentür und Oberteil in Staustellung;
- **Fig. 18**: den Ausschnitt des Fahrzeuginnenraums von Fig. 16 mit Oberteil in Staustellung mit in die Kabineneinheit verschobenem Waschbecken;
- **Fig. 19**: den Ausschnitt des Fahrzeuginnenraums von Fig. 16 mit in den Toilettenbereich verschobenem Waschbecken und Oberteil ohne Einleger;
- **Fig. 20**: den Ausschnitt des Fahrzeuginnenraums von Fig. 16 mit dem Oberteil in Zwischenstellung beim Verlagern des Oberteils von der Staustellung in die Nutzstellung bei geöffneter Toilettenraumtür; und
- **Fig. 21**: den Ausschnitt des Fahrzeuginnenraums von Fig. 16 mit Oberteil in Nutzstellung und geöffneter Toilettentür.

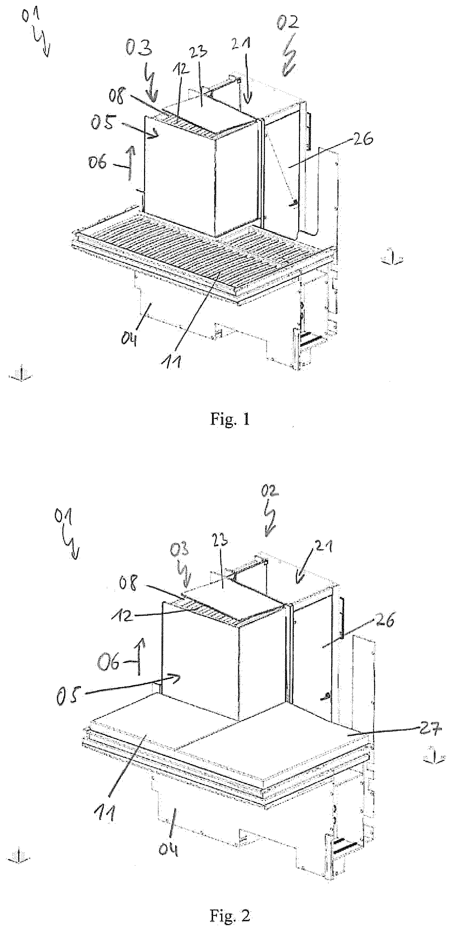

Der Zusammenschau der **Figuren 1** bis **8** ist die Funktionsweise des Sanitärabschnitts des erfindungsgemäßen Campingfahrzeugs entnehmbar. **Fig. 1** zeigt einen Ausschnitt eines Fahrzeuginnenraums 01 eines erfindungsgemäßen Campingfahrzeugs mit einem Sanitärabschnitt 02 und einem Bettbereich 11. Der Sanitärabschnitt 02 umfasst eine Kabineneinheit 03 und einen Toilettenbereich 21, über dessen Toilettentür 26 der Sanitärabschnitt 02 zugänglich ist. Das im Wesentlichen korpusartig ausgebildete Oberteil 05 der Kabineneinheit 03 ist in Fahrzeughochrichtung 06 aus einer abgesenkten Staustellung in eine angehobene Nutzstellung, welche in **Figuren 1** und **2** dargestellt ist, verlagerbar. In Nutzstellung des Oberteils 05 bilden Unterteil 04 und Oberteil 05 einen nutzbaren Innenraum 07 der Kabineneinheit 03 aus. An der Decke 08 des Oberteils 05 ist ein Lattenrostelement 12 angeordnet, welches in Nutzstellung durch die Klappenanordnung 23 abgedeckt wird. **Fig. 2** zeigt nochmals den bereits in **Fig. 1** dargestellten Fahrzeuginnenraum 01 mit Sanitärabschnitt 02 und Bettbereich 11, wobei im Unterschied zu **Fig. 1** der Bettbereich 11 eine auf einem Lattenrost abgelegte Matratze 27 aufweist.

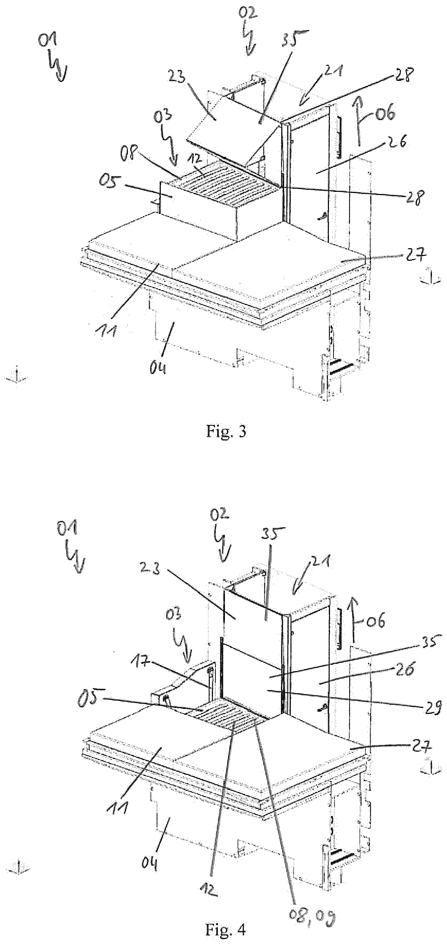

**Fig. 3** zeigt den Ausschnitt des Fahrzeuginnenraums 01 des erfindungsgemäßen Campingfahrzeugs während des Überführens des Oberteils 05 von der Nutzstellung in die Staustellung. Gemäß der Darstellung in **Fig. 3** befindet sich das Oberteil 05 somit in einer Zwischenstellung zwischen Nutzstellung und Staustellung. Es ist zu erkennen, dass die Klappenanordnung 23 über zumindest zwei Klappenlager 28 einerseits am Toilettenbereich 21 und andererseits am Oberteil 05 angelenkt ist. Weiter ist der Fig. 3 zu entnehmen, dass die Klappenanordnung 23 zwei Platten 35 aufweist, die klappbar, bevorzugt mittels eines Scharniers, zueinander angeordnet sind. In Verbindung mit den Klappenlagern 28 ermöglicht dies ein Aufeinanderklappen der beiden Platten 35 der Klappenanordnung 23 in Nutzstellung, wie es in den **Figuren** 1 und 2 gezeigt ist, sowie ein Anordnen der Platten 35 in einer Ebene, um eine Trennwand 29 auszubilden, wie es in den **Figuren 4** bis **8** dargestellt ist.

Die **Figuren 4** bis **8** zeigen das Oberteil 05 der Kabineneinheit 03 in Staustellung, wobei zu erkennen ist, dass an der Decke 08 des Oberteils 05 ein Lattenrostelement 12 angeordnet ist. Somit bildet die Decke 08 in der abgesenkten Staustellung eine Nutzfläche 09 aus, auf der beispielsweise ein Einleger 30 zur Bildung einer Liegefläche 10 angeordnet werden kann. Weiter ist den **Figuren 4** bis **8** zu entnehmen, dass in der Staustellung des Oberteils 05 die Klappenanordnung 23 mit den beiden Platten 35 eine Trennwand 29 zur Abtrennung des Sanitärbereichs 02 vom Bettbereich 11 ausbildet. Die Verstellung des Oberteils 05 zwischen der Nutzstellung und der Staustellung ist mittels eines in den **Figuren 1** bis **8** nicht ersichtlichen Riemenantriebs 14 über dessen Riemen 17 möglich.

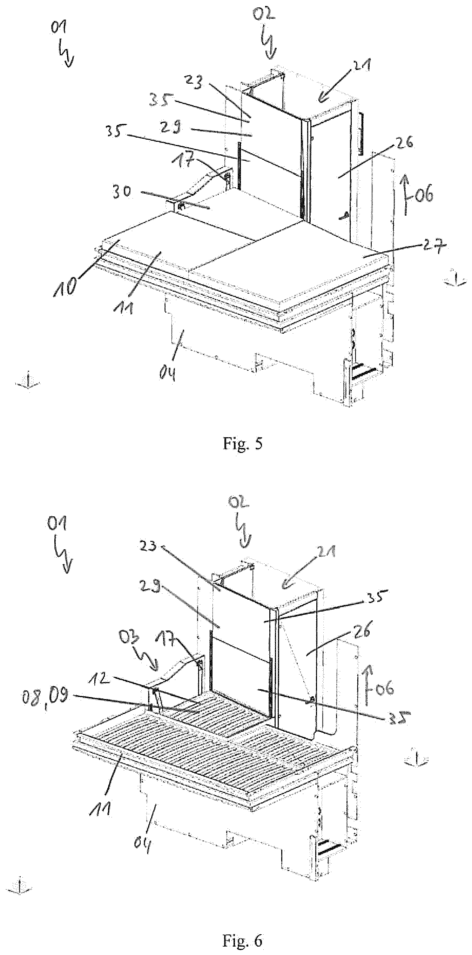

**Fig. 5** zeigt die bereits aus **Fig. 4** bekannte Darstellung des Fahrzeuginnenraums 01 des erfindungsgemäßen Campingfahrzeugs, wobei auf dem Lattenrost 12 der Deckel 08 ein Einleger 30 angeordnet ist, um im Bettbereich 11 eine Liegefläche 10 auszubilden.

Auch **Fig. 6** zeigt die bereits aus **Fig. 4** bekannte Darstellung des Fahrzeuginnenraums 01 mit dem Oberteil 05 in Staustellung, wobei in der in **Fig. 6** gezeigten Darstellung die Matratze 27 und der Einleger 30 nicht dargestellt sind, so dass ersichtlich wird, dass aufgrund der vorteilhaften Anordnung eines Lattenrostelements 12 an der Decke 08 des Oberteils 05 die vollständige mit Matratze 27 und Einleger 30 zu belegende Liegefläche des Bettbereichs 11 einen Lattenrost aufweist.

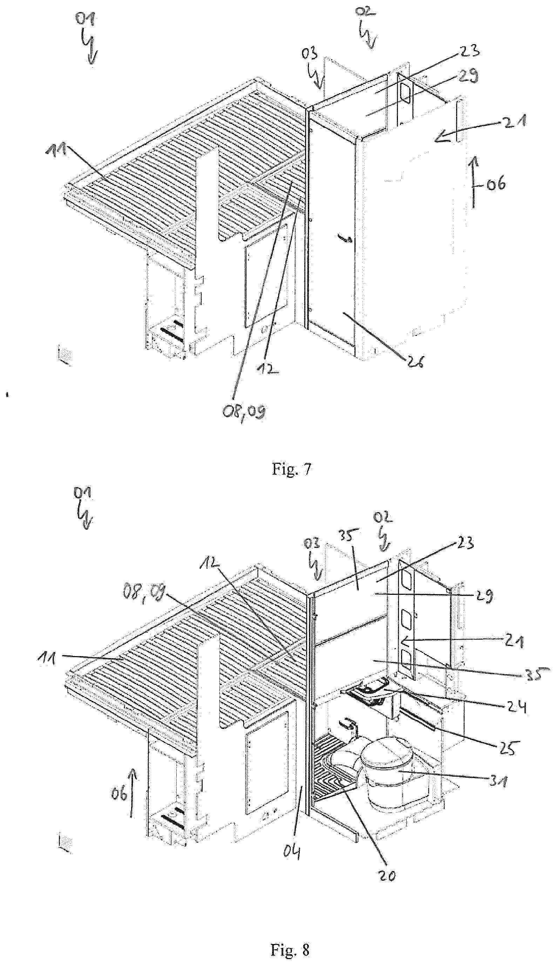

Die **Figuren 7** und **8** zeigen den bereits in den **Figuren 1** bis **6** dargestellten Ausschnitt des Fahrzeuginnenraums 01 eines erfindungsgemäßen Campingfahrzeugs in einer weiteren perspektivischen Ansicht. Das Oberteil 05 befindet sich in Staustellung, so dass die Decke 08 eine Nutzfläche 09 bildet. Vorliegend kann die Nutzfläche 09 zur Ausbildung einer Liegefläche 10 aufgrund des an der Decke 08 angeordneten Lattenrostelements 12 genutzt werden. Die Klappenanordnung 23 trennt den Bettbereich 11 vom Sanitärabschnitt 02 durch die Platten 35 ab. Der Toilettenbereich 21 und somit der Sanitärabschnitt 02 sind durch die Toilettentür 26 zugänglich und abschließbar. **Fig. 8** ist weiter zu entnehmen, dass am Boden der Kabineneinheit 03 eine Duschwanne 20 angeordnet ist. Weiter ist im Toilettenbereich 21 die Toilette 31 angeordnet. Das Waschbecken 24 ist über die Führungsanordnung 25 zumindest teilweise in die Kabineneinheit 03 zur Nutzung der Toilette 31 einschiebbar. Zur Nutzung des Waschbeckens 24 in Staustellung des Oberteils 05 ist das Waschbecken 24 in den Toilettenbereich 21 verschiebbar.

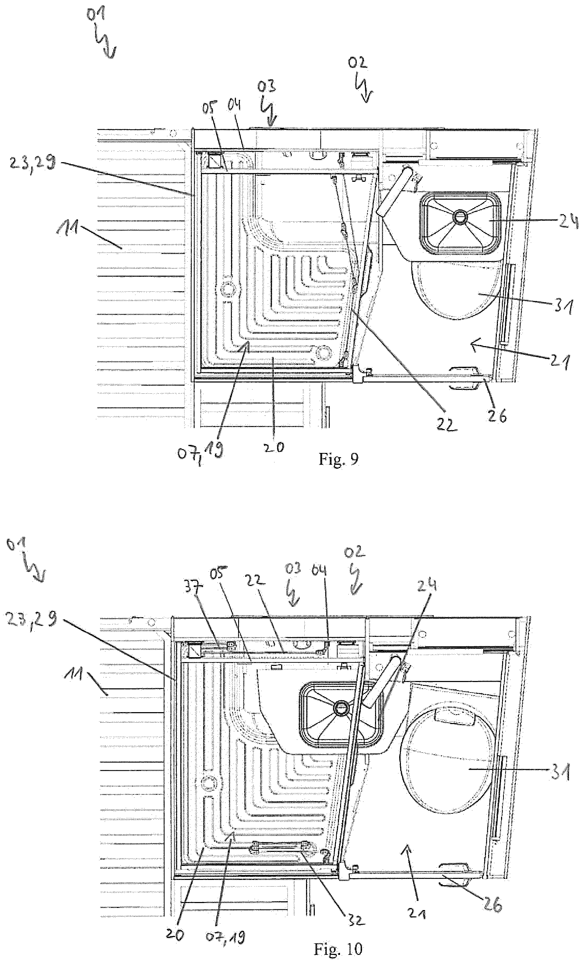

Die **Figuren 9** und **10** zeigen einen Ausschnitt des Fahrzeuginnenraums 01 des erfindungsgemäßen Campingfahrzeugs mit einem Sanitärabschnitt 02 und einem Bettbereich 11 in Draufsicht, wobei die Decke 08 des Oberteils 05 der Übersichtlichkeit halber nicht dargestellt ist. Der Innenraum 07 der Kabineneinheit 03 ist als Duschkabine 19 ausgebildet und Boden der Kabineneinheit 03 ist eine Duschwanne 20 angeordnet. Der unmittelbar an den Sanitärabschnitt 02 angrenzende Bettbereich 11 ist durch die eine Trennwand 29 ausbildende Klappenanordnung 23 vom Sanitärabschnitt 02, insbesondere von der Duschkabine 19, getrennt. Weiter ist es ersichtlich, dass der gezeigte Sanitärabschnitt 02 neben der Kabineneinheit 03 einen Toilettenbereich 21 aufweist, der durch die Toilettentür 26 zugänglich ist und in dem die Toilette 31 aufgenommen ist. Zur Abtrennung der als Duschkabine 19 ausgebildeten Kabineneinheit 03 gegenüber dem Toilettenbereich 21 kann die Türanordnung 22, wie in **Fig. 9** gezeigt, ausgeklappt werden. Weiter ist das Waschbecken 24 an einer in den **Figuren 9** und **10** nicht ersichtlichen Führungsanordnung 25 vom Toilettenbereich 21 in die Kabineneinheit 03 verschiebbar. So kann zur Nutzung der Duschkabine 19 das Waschbecken 24 in den Toilettenbereich 21 verschoben werden, wie in **Fig. 9** dargestellt, oder zur Nutzung der Toilette 31 das Waschbecken 24 zumindest teilweise in die Kabineneinheit 03 verschoben werden, wie in **Fig. 10** dargestellt. Im Gegensatz zur **Fig. 9** sind in **Fig. 10** die Klapptüren 32 der Türanordnung 22 in eingeklapptem Zustand dargestellt. Im eingeklappten Zustand der Türanordnung 22 lässt sich das Oberteil 05 von der Nutzstellung in die Staustellung überführen. Es ist ersichtlich, dass die hinter dem Waschbecken angeordnete Klapptür 32 der Türanordnung 22 bei Überführen des Oberteils 05 von der Nutzstellung in die Staustellung zwischen dem Oberteil 05 und dem Unterteil 04 in einem Zwischenraum aufgenommen wird. Des Weiteren kann in diesem Zwischenraum zwischen Oberteil 05 und Unterteil 04 ein Duschkopf mit Duschschlauch, eine Mischbatterie und/oder eine Bedieneinheit der Dusche aufgenommen werden.

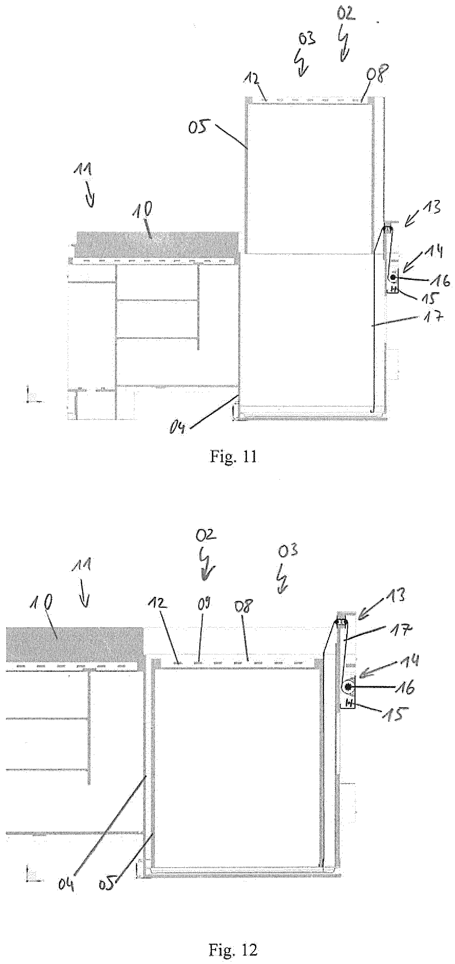

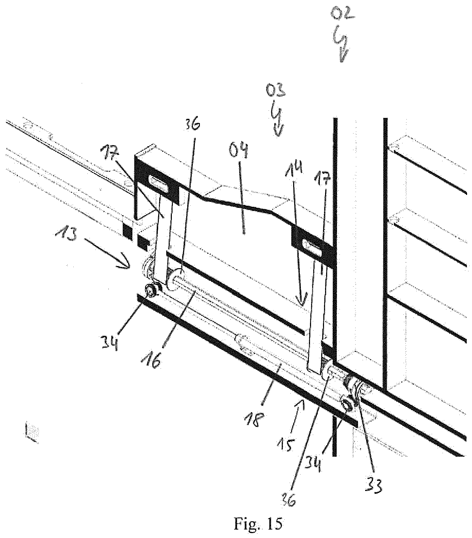

Den **Figuren 11** und **12** ist eine schematische Schnittdarstellung des Sanitärabschnitts 02 und des angrenzenden Bettbereichs 11 zu entnehmen, wobei sich das Oberteil 05 in **Fig. 11** in Nutzstellung und in **Fig. 12** in Staustellung befindet. In der in **Fig. 12** dargestellten Staustellung des Oberteils 05 trägt die Decke 08 mit ihrer mit einem Lattenrostelement 12 versehenen Nutzfläche 09 dazu bei, die Liegefläche 10 des Bettbereichs 11 zu vergrößern, indem ein hier nicht dargestellter Einleger 30 auf das Lattenrostelement 12 aufgelegt werden kann. Über die Hubmechanik 13, die einen Riemenantrieb 14 umfasst, kann das Verlagern des Oberteils 05 zwischen der Staustellung und der Nutzstellung unterstützt werden, so dass der vom Nutzer aufzubringende Kraftaufwand minimiert werden kann. Der Riemenantrieb 14 umfasst eine Wickelwelle 16 für den Riemen 17, wobei auf der Wickelwelle 16 zumindest eine Gurtrolle 36 drehfest angeordnet ist, um aufgrund einer Drehbewegung der Wickelwelle 16 den als Gurt ausgebildeten Riemen 17 auf- bzw. abzuwickeln. Die Antriebseinheit 15 ist derart ausgelegt, dass sie die rotierbar gelagerte Wickelwelle 16 antreibt. Hierzu können, wie in **Fig. 12** nicht ersichtlich jedoch in **Fig. 15** dargestellt, eine Umlenkrolle 34 und eine Seilrolle 33 zur Kraftübertragung vorgesehen sein.

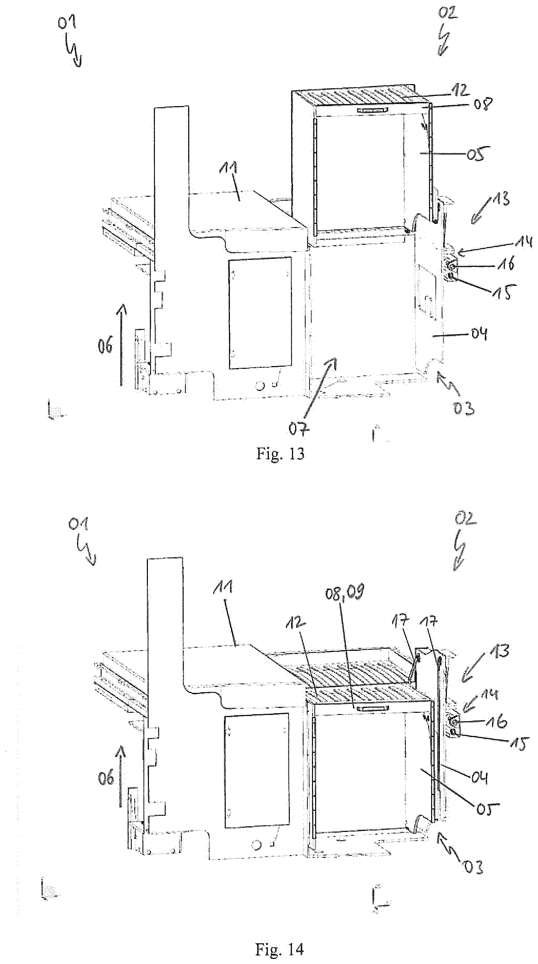

Der Zusammenschau der **Figuren 13** und **14** ist ein Ausschnitt aus einem Fahrzeuginnenraum 01 eines erfindungsgemäßen Campingfahrzeugs mit einem Sanitärabschnitt 02 und einem Bettbereich 11 in einer weiteren perspektivischen Ansicht zu entnehmen. In **Fig. 14** ist das Oberteil 05 der Kabineneinheit 03 in Staustellung gezeigt, während in **Fig. 13** das Oberteil 05 in Fahrzeughochrichtung 06 verschoben und in die Nutzstellung überführt wurde. Die Decke 08 des Oberteils 05 weist wiederum ein Lattenrostelement 12 auf, so dass die Decke 08 in Staustellung eine Nutzfläche 09 zur Vergrößerung des Bettbereichs 11, insbesondere der Liegefläche 10 des Bettbereichs 11, ausbildet. In den **Figuren 13** und **14** ist der Innenraum 07 der Kabineneinheit 03 nicht ausgebaut, kann jedoch je nach Anforderung, beispielsweise wasserdicht ausgekleidet und als Dusche genutzt werden. Den **Figuren 13** und **14** ist weiter zu entnehmen, dass am Unterteil 04 bevorzugt zwischen einer Außenwandung des Campingfahrzeugs und einer Wandung des Unterteils 04 eine Hubmechanik 13 angeordnet ist, die einen Riemenantrieb 14 mit einer Wickelwelle 16 und zwei als Gurtband ausgebildeten Riemen 17 aufweist. Die Hubmechanik 13 wird durch eine Antriebseinheit 15 angetrieben, welche für eine Drehbewegung der Wickelwelle 16 sorgt, aufgrund der die Riemen 17 jeweils auf eine Gurtrolle 36 aufgewickelt oder von einer Gurtrolle 36 abgewickelt werden.

**Fig. 15** zeigt einen Ausschnitt des Fahrzeuginnenraums 01 des erfindungsgemäßen Campingfahrzeugs, insbesondere der Hubmechanik 13. Wie bereits in den Figuren 14 und 15 ist es ersichtlich, dass die Hubmechanik 13 an der Rückseite des Unterteils 04 der Kabineneinheit 03 angeordnet ist. Die Hubmechanik 13 dient der Unterstützung der Verstellung des hier nicht dargestellten Oberteils 05 der Kabineneinheit 03 zwischen einer Staustellung und einer Nutzstellung, um den Sanitärabschnitt 02 zu vergrößern und beispielsweise einen Duschbereich nutzbar zu machen. Hierzu weist die Hubmechanik 13 einen Riemenantrieb 14 sowie eine Gasdruckfeder 18 umfassende Antriebseinheit 15 auf. Der Riemenantrieb 15 umfasst eine rotierbar gelagerte Wickelwelle 16, auf der zwei Gurtrollen 36 für jeweils einen als Gurtband ausgebildeten Riemen 17 verdrehfest angeordnet sind. Zudem ist auf der Wickelwelle 16 eine Seilrolle 33 zum Antrieb der Wickelwelle 16 durch die Antriebseinheit 15 angeordnet. Die Antriebseinheit 15 umfasst eine Gasdruckfeder 18 an deren Enden jeweils eine Lenkrolle 34 angeordnet ist. Über ein Seil, das über die zwei Umlenkrollen 34 an den beiden Enden der Gasdruckfeder 18 umgelenkt wird, können die auftretenden Kräfte aufgeteilt und die Linearbewegung der Gasdruckfeder 18 in eine Drehbewegung der Wickelwelle 16 und somit der Gurtrollen 36 umgewandelt werden. Somit kann durch das Aus- und Einfahren der Gasdruckfeder 18 eine Drehbewegung der Gurtrollen 36 erzeugt werden und somit das teleskopierbare Oberteil 05 der Kabineneinheit 03 angehoben oder abgesenkt werden. Dazu sind die als Gurtband ausgebildeten Riemen 17 an einem Ende auf die an der Wickelwelle 16 angeordneten Gurtrollen 36 aufrollbar und mit dem anderen Ende am Oberteil 05 befestigt. Die Befestigung der Riemen 17 am Oberteil 05 ist aus **Fig. 15** nicht ersichtlich, geht jedoch aus einer Zusammenschau der **Figuren 11, 12** und **15** hervor. Bevorzugt wird über die Hubmechanik 13 gerade so viel Kraft aufgebracht, dass das Eigengewicht des Oberteils 05 kompensiert wird.

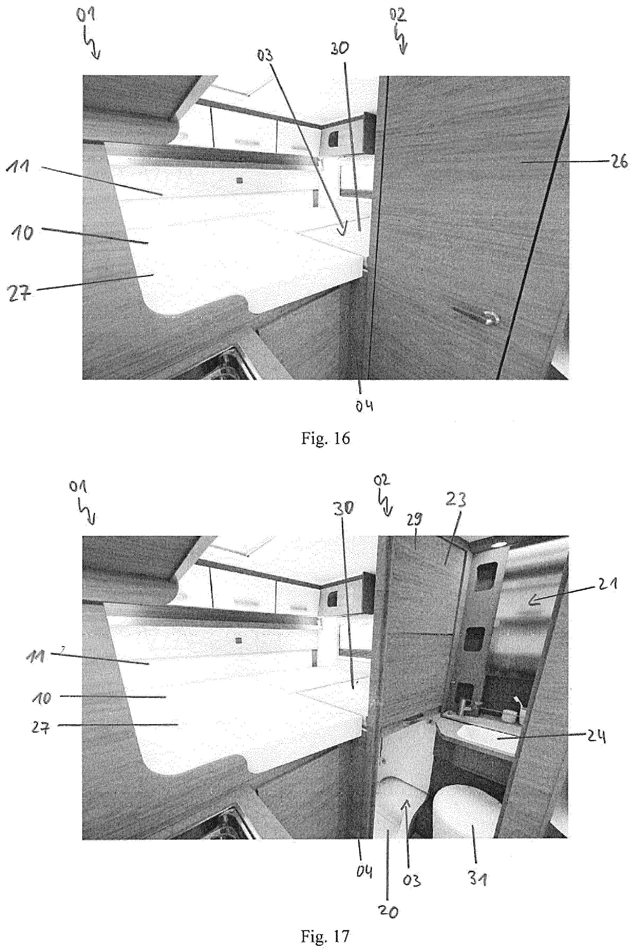

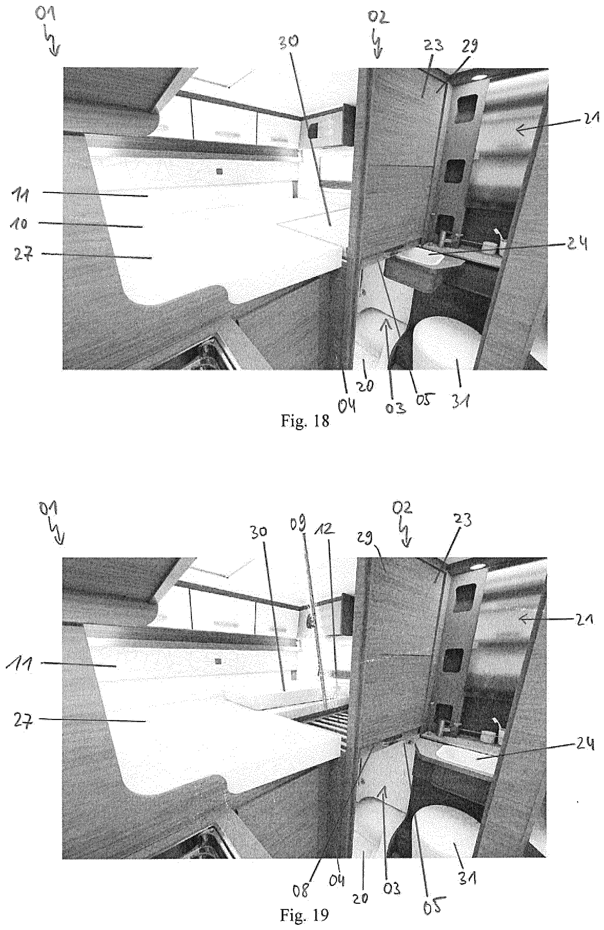

Einer Zusammenschau der **Figuren 16** bis **21** ist ein Ausschnitt des Fahrzeuginnenraums 01 eines erfindungsgemäßen Campingfahrzeugs mit einem Oberteil 05 der Kabineneinheit 03 in verschiedenen Stellungen zu entnehmen. **Fig. 16** zeigt einen Ausschnitt des Fahrzeuginnenraums 01 mit Sanitärabschnitt 02, der die Kabineneinheit 03 umfasst, und einen Bettbereich 11 mit einer durch die Matratze 27 und den Einleger 30 gebildeten Liegefläche 10. Das in **Fig. 16** nicht sichtbare Oberteil 05 ist in das Unterteil 04 in Nutzstellung eingeschoben. In **Fig. 16** ist die Toilettentür 26, über die der Nutzer Zutritt zum Sanitärabschnitt 02 erhält, verschlossen, wohingegen in den weiteren **Figuren 17** bis **21** die Toilettentür 26 nicht dargestellt ist, weshalb der Einblick in den Sanitärabschnitt 02 freigegeben ist. **Fig. 17** zeigt nochmals das Oberteil 05 in Staustellung, jedoch ist es aufgrund der nicht dargestellten Toilettentür 26 ersichtlich, dass der Bettbereich 11 durch die Klappenanordnung 23, die eine Trennwand 29 ausbildet, vom Sanitärabschnitt 02 getrennt ist. Der Sanitärabschnitt weist einen Toilettenbereich 21 und eine Kabineneinheit 03 auf. Das Waschbecken 24 ist zwischen diesen beiden Bereichen, nämlich zwischen Toilettenbereich 21 und Kabineneinheit 03, verschiebbar angeordnet. Zur Nutzung der Toilette 31 kann das Waschbecken 24, wie in **Fig. 18** dargestellt, zumindest teilweise in die Kabineneinheit 03 eingeschoben werden. Aus **Fig. 19** ist ersichtlich, dass die Decke 08 des Oberteils 05 aufgrund des an der Decke 08 angeordneten Lattenrostelements 12 eine Nutzfläche 09 ausbildet. Mittels dieser Nutzfläche 09 und des Einlegers 30 kann die Liegefläche 10 des Bettbereichs 11 erweitert werden.

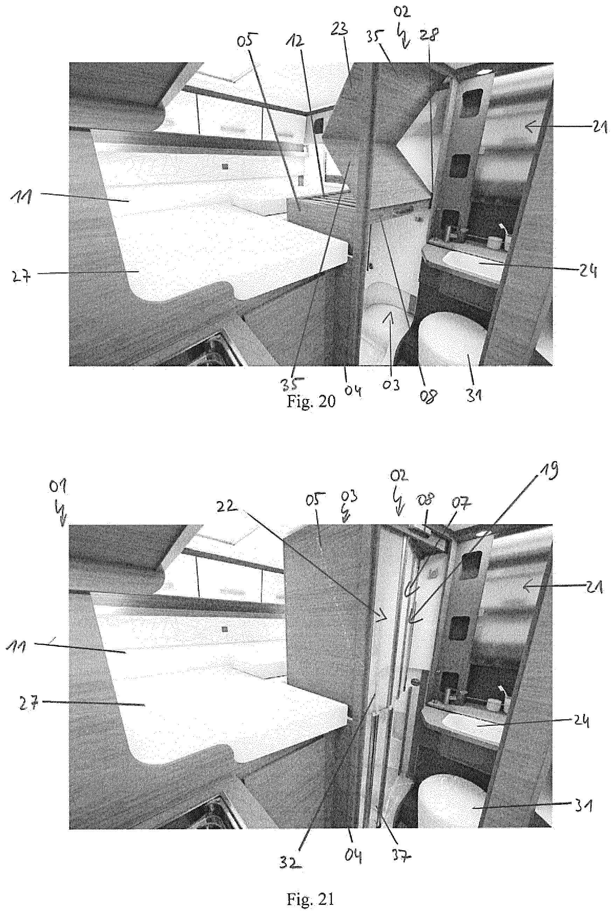

**Fig. 20** zeigt das Oberteil 05 in einer Zwischenstellung, während der Überführung von der Staustellung in die Nutzstellung. Es ist zu erkennen, dass die Klappenanordnung 23 zwei Platten 35 aufweist, die klappbar, bevorzugt über ein Scharnier miteinander verbunden sind, wobei ein unteres Ende der Klappenanordnung 23 am Oberteil 05 und ein oberes Ende der Klappenanordnung 23 am Toilettenbereich 21 des Sanitärabschnitts 02 mittels Klappenlager 28 befestigt ist.

**Fig. 21** zeigt das Oberteil 05 in Nutzstellung, so dass die Kabineneinheit 03 eine Duschkabine 19 ausbildet, die gegenüber dem Toilettenbereich 21 durch die Türanordnung 22 abtrennbar ist. Es ist zu erkennen, dass die Türanordnung 22 eine obere Klapptür 32 und eine untere Klapptür 37 aufweist. Die untere Klapptür 37 ist in Staustellung des Oberteils 05 bevorzugt im Zwischenraum zwischen Oberteil 05 und Unterteil 04 zusammengeklappt angeordnet. Zur Nutzung der Duschkabine 19 ist das Waschbecken 24 in den Toilettenbereich 21 verschoben. Weiter ist zu erkennen, dass der Innenraum 07 der Kabineneinheit 03 wasserdicht ausgekleidet ist und somit in Kombination mit der am Boden der Kabineneinheit 03 angeordneten Duschwanne 20 eine eine ausreichende Stehhöhe aufweisende Duschkabine 19 bereitstellt.

### Bezugszeichenliste

- 01: Fahrzeuginnenraum
- 02: Sanitärabschnitt
- 03: Kabineneinheit
- 04: Unterteil
- 05: Oberteil
- 06: Fahrzeughochrichtung
- 07: Innenraum der Kabineneinheit
- 08: Decke
- 09: Nutzfläche
- 10: Liegefläche
- 11: Bettbereich
- 12: Lattenrostelement
- 13: Hubmechanik
- 14: Riemenantrieb
- 15: Antriebseinheit
- 16: Wickelwelle
- 17: Riemen
- 18: Gasdruckfeder
- 19: Duschkabine
- 20: Duschwanne
- 21: Toilettenbereich
- 22: Türanordnung
- 23: Klappenanordnung
- 24: Waschbecken
- 25: Führungsanordnung
- 26: Toilettentür
- 27: Matratze
- 28: Klappenlager
- 29: Trennwand
- 30: Einleger
- 31: Toilette
- 32: Obere Klapptür
- 33: Seilrolle
- 34: Umlenkrolle
- 35: Platte
- 36: Gurtrolle
- 37: Untere Klapptür

## Patentansprüche

1. Campingfahrzeug, insbesondere Wohnmobil, Wohnwagen, Campingbus, Freizeitfahrzeug mit Hubdach oder dergleichen, mit einem Fahrzeuginnenraum (01), der einen Sanitärabschnitt (02) umfasst,
**dadurch gekennzeichnet,**
**dass** der Sanitärabschnitt (02) eine Kabineneinheit (03) umfasst, die ein Unterteil (04), das fahrzeugfest angeordnet ist, und mindestens ein Oberteil (05) umfasst, das gegenüber dem Unterteil (04) in Fahrzeughochrichtung (06) aus einer abgesenkten Staustellung in eine angehobenen Nutzstellung verlagerbar ist, so dass ein Innenraum (07) der Kabineneinheit (03) für einen Nutzer stehend zugänglich ist.

2. Campingfahrzeug nach Anspruch 1,
**dadurch gekennzeichnet,**
**dass** das Oberteil (05) in der abgesenkten Staustellung von dem Unterteil (04) aufgenommen ist.

3. Campingfahrzeug nach Anspruch 1 oder 2, **dadurch gekennzeichnet, dass** das Oberteil (05) eine Decke (08) hat, die in der abgesenkten Staustellung eine Nutzfläche (09) bildet.

4. Campingfahrzeug nach Anspruch 3,
**dadurch gekennzeichnet,**
**dass** die Nutzfläche (09) Teil einer Liegefläche (10) ist, die von der Decke (08) des Oberteils (05) und von einem Bettbereich (11) gebildet ist.

5. Campingfahrzeug nach Anspruch 4,
**dadurch gekennzeichnet,**
**dass** an der Decke (08) des Oberteils (05) ein Lattenrostelement (12) angeordnet ist.

6. Campingfahrzeug nach einem der Ansprüche 1 bis 5,
**dadurch gekennzeichnet,**
**dass** eine Hubmechanik (13), die vorzugsweise einen Riemenantrieb (14) aufweist, umfasst ist.

7. Campingfahrzeug nach Anspruch 6,
**dadurch gekennzeichnet,**
**dass** der Riemenantrieb (14) ein Antriebselement umfasst, das eine Wickelwelle (16) für mindestens einen Riemen (17) aufweist, der an das Oberteil (05) angebunden ist.

8. Campingfahrzeug nach Anspruch 6 oder 7,
**dadurch gekennzeichnet,**
**dass** die Hubmechanik (13) eine Antriebseinheit (15) umfasst, die vorzugsweise eine Gasdruckfeder (18) und/oder einen Antriebsmotor umfasst.

9. Campingfahrzeug nach einem der Ansprüche 1 bis 8,
**dadurch gekennzeichnet,**
**dass** die Kabineneinheit (03) eine Duschkabine (19) bildet und an einem Boden der Kabineneinheit (03) eine Duschwanne (20) ausgebildet ist.

10. Campingfahrzeug nach einem der Ansprüche 1 bis 9,
**dadurch gekennzeichnet,**
**dass** die Kabineneinheit (03) an einen Toilettenbereich (21) des Sanitärabschnitts (02) grenzt und in der Nutzstellung des Oberteils (05) von dem Toilettenbereich (21) durch eine öffenbare Türanordnung (22) getrennt ist.

11. Campingfahrzeug nach Anspruch 10,
**dadurch gekennzeichnet,**
**dass** der Toilettenbereich (21) auf der Seite der Kabineneinheit (03) eine Klappenanordnung (23) umfasst, die in der Staustellung des Oberteils (05) eine Trennwand (29) zu einer Sanitärabschnittumgebung bildet und die vorzugsweise an das Oberteil (05) der Kabineneinheit (03) angelenkt ist und die vorzugsweise bei einem Verstellen des Oberteils (05) gegenüber dem Unterteil (04) der Kabineneinheit (03) zwangsgesteuert eine Verschwenkbewegung erfährt.

12. Campingfahrzeug nach einem der Ansprüche 1 bis 11,
**dadurch gekennzeichnet,**
**dass** ein Waschbecken (24) umfasst ist, das in einer Führungsanordnung (25) zumindest teilweise in die Kabineneinheit (03) verschiebbar ist.
